# EUROPEAN PATENT APPLICATION

(11) **EP 4 325 634 A1**
(43) Date of publication of application: **21.02.2024**
(21) Application number: 22922613.9
(22) Date of filing: 25.01.2022
(51) Int. Cl.: H01M 10/613, H01M 10/6568, H01M 10/635, H01M 10/6556

(54) **BATTERY COOLING DEVICE, BATTERY PACK, ELECTRIC DEVICE, AND METHOD FOR MANUFACTURING BATTERY COOLING DEVICE**

(71) Applicant: Contemporary Amperex Technology Co., Limited, Ningde, Fujian 352100 (CN)
(72) Inventor: LI, Quanguo, Ningde, Fujian 352100 (CN); LIU, Qian, Ningde, Fujian 352100 (CN); YE, Yonghuang, Ningde, Fujian 352100 (CN); YU, Chunpeng, Ningde, Fujian 352100 (CN); HUANG, Fajun, Ningde, Fujian 352100 (CN)
(74) Representative: Rowlands, Stuart Michael
(86) International application number: PCT/CN2022/073782
(87) International publication number: WO 2023/141762

(57) **Abstract**

The present invention relates to a battery cooling device, a battery pack, an electric device, and a method for manufacturing the battery cooling device. A battery cooling device. The battery cooling device comprises: a housing; a cooling channel arranged inside the housing, the cooling channel being used for flow of a cooling fluid and defining a flow direction of the cooling fluid along the cooling channel; a cooling fluid flow adjustment component arranged inside the housing, the adjustment component being deformed from a first opening degree to a second opening degree when a temperature rises, or being deformed from the second opening degree to the first opening degree when the temperature is reduced, wherein a fluid flow under the first opening degree is smaller than a fluid flow under the second opening degree; an adjustment component deformation restriction component arranged inside the housing, the restriction component being deformed from a first configuration to a second configuration when the temperature rises, or being deformed from the second configuration to the first configuration when the temperature is reduced, and the restriction component being positioned immediately adjacent the adjustment component, such that in the first configuration of the restriction component, the deformation of the adjustment component toward the increased opening degree is at least partially hindered by the restriction component, and in the second configuration of the restriction component, the deformation of the adjustment component is basically not hindered by the restriction component, wherein along with the adjustment component being deformed from the first opening degree to the second opening degree, the restriction component changes from the first configuration to the second configuration, and along with the adjustment component being deformed from the second opening degree to the first opening degree, the restriction component changes from the second configuration to the first configuration.

## Description

### TECHNICAL FIELD

The present application relates to the field of batteries, in particular to a battery cooling device, a battery pack, an electrical device and a method for manufacturing a battery cooling device.

### BACKGROUND

Energy conservation and emission reduction are the key for sustainable development of the automobile industry, and in such circumstances, electric vehicles become an important part of sustainable development of automobiles due to the advantages of energy conservation and environmental protection thereof. For the electric vehicles, a battery technique is another vital factor for its development.

For the battery technique, there is always a need for improvement of the safety of battery packs and delaying the attenuation of the lives of the battery packs.

### SUMMARY

In view of the above problems, the present application provides a battery cooling device, a battery pack, an electrical device and a method for manufacturing a battery cooling device, which can achieve at least one of the purposes of improving the safety of the battery pack, delaying the attenuation of the lives of the battery packs and the like.

In the first aspect, the present application provides the battery cooling device, including: a shell; a cooling channel arranged inside the shell, wherein the cooling channel is configured to allow flowing of cooling fluid and restrict a flowing direction of the cooling fluid along the cooling channel; a cooling fluid flow regulation component arranged inside the shell, wherein the regulation component is deformed from a first opening degree to a second opening degree when the temperature rises, or is deformed from the second opening degree to the first opening degree when the temperature is reduced, and the fluid flow at the first opening degree is less than the fluid flow at the second opening degree; and regulation component deformation restriction components arranged inside the shell, wherein the restriction component is deformed from a first configuration to a second configuration when the temperature rises, or is deformed from the second configuration to the first configuration when the temperature is reduced; the restriction component is positioned next to the regulation component, so that in the first configuration of the restriction component, deformation of the regulation component for increasing the opening degree is at least partially hindered by the restriction component, and in the second configuration of the restriction component, deformation of the regulation component is basically not hindered by the restriction component; and with the regulation component deforming from the first opening degree to the second opening degree, the restriction component changes from the first configuration to the second configuration, and with the regulation component deforming from the second opening degree to the first opening degree, the restriction component changes from the second configuration to the first configuration.

According to the technical solution of this embodiment of the present application, the cooling fluid flow regulation components are arranged inside the cooling channels of the battery cooling device, the flow of the cooling fluids can be distributed automatically according to the different temperatures of a battery pack, large-flow cooling is adopted at the high temperature, and small-flow cooling is adopted at the low temperature, thereby promoting the temperature uniformity of the battery pack; and the regulation component deformation restriction components are also arranged inside the cooling channels of the battery cooling device, can cooperate with the regulation components, and can actively restrict the increase of the opening degree as required so as to maintain a proper temperature, particularly preserve the heat at the low temperature, thereby improving the safety of the battery pack and delaying the attenuation of the life of the battery pack.

In some embodiments, each of the regulation components is deformed from the second opening degree to a third opening degree when the temperature rises, or is deformed from the third opening degree to the second opening degree when the temperature is reduced, the fluid flow at the second opening degree is less than the fluid flow at the third opening degree, and with the regulation component deforming from the second opening degree to the third opening degree and with the regulation component deforming from the third opening degree to the second opening degree, the corresponding restriction component basically keeps the second configuration. By means of such cooperation of the regulation components and the restriction components, the restriction components have the effect of keeping the second configurations at the very high temperature, that is, when the battery pack needs to be remarkably cooled, then the further increasing of the opening degrees of the regulation components is not restricted, and thus the regulation components can further increase the opening degrees, thereby increasing the flow and improving the cooling effect.

In some embodiments, each of the restriction components includes a fixed portion and at least one movable portion capable of moving relative to the fixed portion according to the temperature of the restriction component; each of the restriction components is fixedly attached to an inner wall of the corresponding cooling channel by means of the fixed portion of the restriction component; and the movable portion of each of the restriction components extends in the corresponding cooling channel from the fixed portion of the restriction component to the corresponding regulation component. By means of such structure, the restriction components which are of simple structures and are deformed with temperature are formed, the fixed portions are configured to fix the restriction components, and the movable portions are configured to achieve the changed configurations of the restriction components, thereby restricting and not restricting the deformation of the regulation components for increasing the opening degrees.

In some embodiments, each of the restriction components is positioned in such a manner that the movable portion thereof extends on the upstream side of the fixed portion thereof in the flowing direction of the corresponding cooling fluid. By means of such structure, the movable portions of the restriction components face the upstream side to match with the regulation components, and the fixed portions of the restriction components are located on the downstream side, thereby avoiding the disturbance of incoming flows by the structures of the restriction components.

In some embodiments, the fixed portion of each of the restriction components is at least partially positioned in a concave portion formed in the corresponding inner wall. By means of such structure, the stable connection of the restriction components and the inner walls is facilitated.

In some embodiments, an angle between the fixed portion and the at least one movable portion of each of the restriction components changes according to the temperature of the restriction component so as to restrict the first configuration and the second configuration. By means of such structure, the restriction components which are of simple structures and are deformed with temperature are formed, the included angles formed between the fixed portions and the movable portions are configured to determine the changed configurations of the restriction components, thereby restricting and not restricting the deformation of the regulation components for increasing the opening degrees.

In some embodiments, the at least one movable portion of each of the restriction components includes two movable portions, and an angle between the two movable portions changes according to the temperature of the restriction component so as to restrict the first configuration and the second configuration. By means of such structure, another optional solution is provided for forming selection of the restriction components. An appropriate choice can be made according to the size requirements of the battery cooling device and the cooling channels thereof and the mounting requirements.

In some embodiments, the fixed portion of each of the restriction components is positioned at the roughly central position of the width of the inner wall of the corresponding cooling channel that is perpendicular to the flowing direction of the corresponding cooling fluid, so that the two movable portions of the restriction component are roughly symmetrically arranged on two sides of the fixed portion thereof along the width. By means of such structure, the restriction components are roughly centrally arranged relative to the cooling channels and can roughly symmetrically interact with the regulation components or the corresponding portions thereof by means of the two roughly symmetrically arranged movable portions.

In some embodiments, each of the regulation components includes a fixed portion and at least one movable portion capable of moving relative to the fixed portion according to the temperature of the regulation component; each of the regulation components is fixedly attached to the inner wall of the corresponding cooling channel by means of the fixed portion of the regulation component; and the movable portion of each of the regulation components extends in the corresponding cooling channel from the fixed portion of the regulation component. By means of such structure, the regulation components which are of simple structures and are deformed with temperature are formed, the fixed portions are configured to fix the regulation components, and the movable portions are configured to achieve the changed opening degrees of the regulation components, thereby changing the flow of the passing cooling fluids.

In some embodiments, each of the regulation components is positioned in such a manner that the movable portion thereof extends on the downstream side of the fixed portion thereof in the flowing direction of the corresponding cooling fluid. By means of such structure, the portions of the regulation components and the portions of the restriction components are relatively positioned along the flowing directions of the cooling fluids and are compact and ordered.

In some embodiments, the fixed portion of each of the regulation components is at least partially positioned in the concave portion formed in the corresponding inner wall. By means of such structure, the stable connection of the regulation components and the inner walls is facilitated.

In some embodiments, the fixed portion of each of the regulation components is positioned in such a manner that the surface thereof exposed to the cooling channel is roughly flush with the inner wall around the surface. By means of such structure, the influence of the volume of the fixed portions on the cooling fluids is reduced.

In some embodiments, an angle between the fixed portion and the at least one movable portion of each of the regulation components changes according to the temperature of the regulation component so as to restrict the first opening degree and the second opening degree. By means of such structure, the regulation components which are of simple structures and are deformed with temperature are formed, the included angles formed between the fixed portions and the movable portions are configured to determine the changed opening degrees of the regulation components, thereby changing the flow of the passing cooling fluids.

In some embodiments, the regulation components include paired discrete regulation components, and the paired discrete regulation components are basically fixedly attached to the inner walls of the cooling channels in a mirror image manner by means of the corresponding fixed portions thereof. By means of such structure, the paired regulation components are roughly symmetrically arranged relative to the cooling channels and can synergistically change the flow of the passing cooling fluids.

In some embodiments, the at least one movable portion includes two movable portions, and an angle between the two movable portions changes according to the temperature of the regulation component so as to restrict the first opening degree and the second opening degree. By means of such structure, another optional solution is provided for forming selection of the regulation components. An appropriate choice can be made according to the size requirements of the battery cooling device and the cooling channels thereof and the mounting requirements.

In some embodiments, the fixed portion of each of the regulation components is positioned at the roughly central position of the width of the inner wall of the corresponding cooling channel that is perpendicular to the flowing direction of the corresponding cooling fluid, so that the two movable portions of the regulation component are roughly symmetrically arranged on two sides of the fixed portion thereof along the width. By means of such structure, the regulation components are roughly centrally arranged relative to the cooling channels, and can roughly symmetrically interact with the restriction components or the corresponding portions thereof by means of the two roughly symmetrically arranged movable portions.

In some embodiments, increasing the opening degree includes: reducing the proportion of the projected area, relative to the overall area of the section of the corresponding cooling channel that is perpendicular to the flowing direction of the corresponding cooling fluid, of each of the movable portions of the regulation components in the section at the position of the regulation component. By means of such structure, the movable portions of the regulation components serve as the structures affecting the flow sections of the cooling fluids.

In some embodiments, the section of each of the cooling channels that is perpendicular to the flowing direction of the corresponding cooling fluid is constructed into a rough rectangle; each of the movable portions of the regulation components restricts a length extending from the corresponding fixed portion and a width roughly perpendicular to the length; and the width of each of the movable portions of each of the regulation components for the given cooling channel is constructed to be basically the same with one of the two following sizes, the sum of the lengths of all the movable portions of the regulation component for the given cooling channel is constructed to be no less than the other one of the two following sizes, and the two sizes are as follows:
(1) the width of the inner wall, to which the regulation component is attached, that is perpendicular to the flowing direction of the corresponding cooling fluid; and (2) the width of the inner wall, roughly orthogonal to the inner wall to which the regulation component is attached, that is perpendicular to the flowing direction of the corresponding cooling fluid. By means of such structure, the preferred arrangement for the cooling channels having the roughly rectangular sections is provided, thereby allowing large-range adjustment of the flow sections of the cooling fluids.

In some embodiments, each of the movable portions of the regulation components is constructed and defined to have a front surface configured to face the corresponding incoming cooling fluid and a rear surface opposite the front surface, and the rear surface is constructed to abut against the tail end of the corresponding movable portion of the corresponding restriction component so as to basically hinder the deformation of the regulation component for increasing the opening degree in the case of abutting. By means of such structure, the movable portions of the regulation components and the movable portions of the restriction components interact with each other by means of contact, and thus the restriction components physically hinder the deformation of the regulation components.

In some embodiments, the section of each of the cooling channels that is perpendicular to the flowing direction of the corresponding cooling fluid is constructed into a rough circle; and the corresponding movable portions of the paired discrete regulation components are fixedly connected to blocking components having the roughly circular sections corresponding to the sections in such a manner that the paired discrete regulation components are located in the radially opposite areas on the same sides of the blocking components along the flowing directions of the cooling fluids, so that the blocking components can pivot to change the proportions of the projected areas, relative to the overall areas of the sections of the cooling channels that are perpendicular to the flowing directions of the cooling fluids, in the sections at the positions of the regulation components. By means of such structure, the preferred arrangement for the cooling channels having the roughly circular sections is provided, thereby allowing large-range adjustment of the flow sections of the cooling fluids.

In some embodiments, the restriction components and/or the regulation components include shape memory alloys. Therefore, the restriction components and/or the regulation components are made of temperature-sensitive materials, during operation, the components in the battery cooling device are automatically deformed in response to the temperature changes, the restriction of the restriction components on the deformation of the regulation components is further included, and the above-mentioned and other advantages of the present application are achieved.

In some embodiments, the cooling channels include a plurality of cooling channels, and each of the cooling channels includes an upstream end and a downstream end; each of the cooling channels sinuously extends between the upstream end and the downstream end thereof; and the restriction components and the regulation components in the cooling channels are positioned near the downstream ends or at the highest-temperature positions that the cooling channels pass. By means of such structure, the flow of the cooling fluids can be distributed automatically according to the temperatures of different portions of the battery pack, thereby achieving large-flow cooling in high-temperature areas and small-flow cooling and even heat preservation in low-temperature areas, further promoting the temperature uniformity of the battery pack, improving the safety of the battery pack and delaying the attenuation of the life of the battery pack. In addition, the arrangement positions of the restriction components and the regulation components enhance their responsiveness.

In the second aspect, the present application further provides the battery pack, including a frame and battery modules accommodated in the frame, and further including the battery cooling device according to the present application, wherein the battery cooling device is configured to cool the battery modules.

The advantages of the battery pack are similar to the above-mentioned advantages of the battery cooling device and are not repeated here.

In some embodiments, each of the battery modules includes first battery cells having a first heating characteristic and second battery cells having a second heating characteristic different from the first heating characteristic. Therefore, models of the cells of the battery pack can be selected flexibly.

In some embodiments, the first battery cells and the second battery cells are arranged alternately on the basis of one or more rows of the identical battery modules; or the first battery cells are at least arranged at corner regions of the battery pack, and the second battery cells are at least arranged at the central region of the battery pack. By means of such structure, an advantageous arrangement manner of the battery pack provided with the cells in matching types is provided.

In the fourth aspect, the present application further provides the electrical device, including the battery pack according to the present application, wherein the battery pack is configured to provide electric energy.

The advantages of the electrical device are similar to the above-mentioned advantages of the battery cooling device and are not repeated here.

In the fifth aspect, the present application further provides the method for manufacturing a battery cooling device, including: providing a shell; arranging cooling channels inside the shell, wherein the cooling channels are configured to allow flowing of cooling fluids and restrict flowing directions of the cooling fluids along the cooling channels; arranging cooling fluid flow regulation components inside the shell, wherein each of the regulation components is constructed to be deformed from a first opening degree to a second opening degree when the temperature rises, or to be deformed from the second opening degree to the first opening degree when the temperature is reduced, and the fluid flow at the first opening degree is less than the fluid flow at the second opening degree; arranging regulation component deformation restriction components inside the shell, wherein each of the restriction components is constructed to be deformed from a first configuration to a second configuration when the temperature rises, or to be deformed from the second configuration to the first configuration when the temperature is reduced; and positioning each of the restriction components next to the corresponding regulation component, so that in the first configuration of the restriction component, deformation of the regulation component for increasing the opening degree is at least partially hindered by the restriction component, and in the second configuration of the restriction component, deformation of the regulation component is basically not hindered by the restriction component, wherein the restriction component is constructed as follows: when the regulation component is deformed from the first opening degree to the second opening degree, the restriction component changes from the first configuration to the second configuration, and when the regulation component is deformed from the second opening degree to the first opening degree, the restriction component changes from the second configuration to the first configuration.

The advantages of the method for manufacturing a battery cooling device are similar to the above-mentioned advantages of the battery cooling device and are not repeated here.

The above description is only an overview of the technical solutions of the present application. In order to understand the technical means of the present application more clearly, operations can be performed according to the content of the specification. In addition, in order to make the above-mentioned and other purposes, features and advantages of the present application more obvious and easier to understand, the detailed description of the preferred embodiments of the present application is listed below.

### BRIEF DESCRIPTION OF THE DRAWINGS

By reading the detailed descriptions of the preferred embodiments below, various advantages and benefits would have been clear to those of ordinary skill in the art. The drawings are only for the purpose of showing the preferred embodiments, and are not intended to restrict the present application. In addition, in all the drawings, the same reference numerals are used for indicating the same components. In the drawings:
FIG. 1 is a structure diagram of a vehicle according to some embodiments of the present application;
FIG. 2 is a schematic diagram of an exploded structure of a battery according to some embodiments of the present application;
FIG. 3 is a schematic diagram of an external structure of a battery cooling device according to some embodiments of the present application;
FIG. 4 is a schematic diagram of a sectional structure of a battery cooling device according to some embodiments of the present application;
FIG. 5 is a schematic diagram of a local structure of a battery cooling device according to some embodiments of the present application;
FIG. 6 is a schematic diagram of a local structure of a battery cooling device according to some embodiments of the present application;
FIG. 7 is a schematic diagram of a component structure of a battery cooling device according to some embodiments of the present application;
FIG. 8 is a schematic diagram of a local structure of a battery cooling device according to some embodiments of the present application;
FIG. 9 is a schematic diagram of a local structure of a battery cooling device according to some embodiments of the present application;
FIG. 10 is a schematic diagram of a local structure of a battery cooling device according to some embodiments of the present application;
FIG. 11 is a schematic diagram of a local structure of a battery cooling device according to some embodiments of the present application;
FIG. 12 is a schematic diagram of a component structure of a battery cooling device according to some embodiments of the present application;
FIG. 13 is a schematic diagram of a component structure of a battery cooling device according to some embodiments of the present application;
FIG. 14A and FIG. 14B are schematic diagrams of arrangement modes of battery cells in a battery pack according to some embodiments of the present application; and
FIG. 15 is a schematic diagram of an arrangement mode of battery cells in a battery pack according to some embodiments of the present application.

Reference numerals in the detailed description of the embodiments are as follows:
vehicle 1000;
battery 100, controller 200, and motor 300;
battery pack 1, upper cover plate 10, battery module 20, lower box body 30, battery cooling device 40, and bottom protective plate 50;
first battery cell 201, and second battery cell 202;
shell 400, cooling fluid inlet 401, cooling fluid outlet 402, cooling channel 403, and concave portion 404;
cooling fluid flow regulation component 60, fixed portion 601, movable portion 602, and blocking component 603; and
regulation component deformation restriction component 70, fixed portion 701, and movable portion 702.

### DETAILED DESCRIPTION OF THE EMBODIMENTS

Embodiments of the technical solutions of the present application will be described in detail below in conjunction with the drawings. The embodiments below are only for the purpose of more clearly illustrating the technical solutions of the present application, and therefore only serve as examples and cannot be used to limit the scope of protection of the present application.

Unless otherwise specified, all technical and scientific terms used herein have the same meanings as those commonly understood by those skilled in the art of the present application. The terms used herein are only for the purpose of describing the particular embodiments, and are not intended to limit the present application. The terms "comprising" and "being provided with" and their variants in the description and the claims of the present application and the brief description of the drawings above are intended to cover non-exclusive inclusions.

In the description of the embodiments of the present application, the technical terms "first", "second" and the like are only for the purpose of distinguishing different objects, and cannot be understood as indicating or implying the relative importance or implicitly indicating the number, the specific sequence or the priority of the indicated technical features. In the description of the embodiments of the present application, unless otherwise specified, "a plurality of" means two or more.

The reference to "embodiments" herein means the specific features, structures or characteristics described in conjunction with the embodiments may be included in at least one embodiment of the present application. The phrase appearing at each position of the description does not necessarily indicate the same embodiment, and it is not an exclusively independent or alternative embodiment of other embodiments. Those skilled in the art should explicitly or implicitly understand that the embodiments described herein may be combined with other embodiments.

In the description of the embodiments of the present application, the term "and/or" is only intended to describe association relationships of associated objects, and indicates that there may be three relationships, for example, the expression of "A and/or B" may indicate the following three conditions: A exists separately, A and B exist at the same time, and B exists separately. In addition, the character "/" herein generally indicates that the associated objects have an "or" relationship.

In the description of the embodiments of the present application, the term "a plurality of" means two or more (including two), by the same reasoning, "a plurality of groups" means two or more groups (including two groups), and "a plurality of sheet" means two or more sheets (including two sheets).

In the description of the embodiments of the present application, the orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like are orientations or positional relationships based on the drawings, are only for the purpose of facilitating describing of the embodiments of the present application and simplifying the description, and do not indicate or imply that the indicated devices or elements must have specific orientations or be constructed and operated in specific orientations. Therefore, they cannot be understood as limitations on the embodiments of the present application.

In the description of the embodiments of the present application, unless otherwise explicitly specified and limited, the technical terms "mounting", "connecting", "connection", "fixing" and the like should be understood in a broad sense, for example, they may be fixed connection, and may also be detachable connection or integrated connection; they may be mechanical connection, and may also be electrical connection; and they may be direct connection, may also be indirect connection by means of intermediate media, and may also be communication of the interiors of two elements or the interactive relationship of two elements. For those of ordinary skill in the art, the specific meanings of the above terms in the embodiments of the present application may be understood according to specific circumstances.

At present, in view of the development of the market situation, power batteries are used increasingly widely. The power batteries are used in energy storage power systems such as hydropower, thermal power, wind power and solar power plants, and are also widely used in electric transport such as electric bicycles, battery-operated motor cycles and electric vehicles, as well as in various fields such as military equipment and aerospace. With the continuous expansion of the application field of the power batteries, the market demand thereof is also constantly increased.

The inventor notes that battery cells will emit heat during charging and discharging cycles, for the battery cells, the portions close to edges of a battery pack are good in heat dissipation and low in temperature, the area close to the middle of the battery pack is poor in heat dissipation and high in temperature, the polarization degrees of the battery cells are different due to the different temperatures, and thus the battery cells at the different positions have different charging and discharging capacities, which will accelerate the attenuation of the life of the battery pack and even cause the safety problems. In addition, in order to increase the range, the electric quantity and the volume of the battery pack are made larger and larger. The temperature differences of different positions of the battery pack, especially during the high-power charging and discharging periods, due to the increased battery pack volume are particularly obvious, with the maximum to be 10°C, and even 20°C.

In addition, battery backs have been developed with combinations of at least two different types of cells For example, under the condition that a ternary cell and a ternary lithium iron cell are matched, the ternary cell area emits great heat, and the lithium iron cell area emits little heat. The condition of non-uniform temperature distribution in such battery pack type is more distinct.

In addition, the battery cells may cause pole piece lithium precipitation easily at the low temperature, thereby causing safety accidents. Therefore, heat preservation is needed at the low temperature, and even heating is allowed.

On the basis of the above considerations, in order to improve the safety of the battery pack, to delay the attenuation of the life of the battery pack, and to solve the problem of cell performance deterioration caused by non-uniform temperature distribution of the cell duringusage and adverse heat dissipation at the low temperature, through the intensive study, the inventor designs a battery cooling device, including cooling fluid flow regulation components and regulation component deformation restriction components. Each of the regulation components is at least partially deformed between a first opening degree and a second opening degree in response to temperature changes. Each of the restriction components is at least partially deformed between a first configuration and a second configuration in response to the temperature changes. When each of the regulation components is deformed from the first opening degree to the second opening degree, the corresponding restriction component changes from the first configuration to the second configuration, and when the regulation component is deformed from the second opening degree to the first opening degree, the restriction component changes from the second configuration to the first configuration. Each of the restriction components is positioned next to the corresponding regulation component, so that in the first configuration of the restriction component, deformation of the regulation component for increasing the opening degree is at least partially hindered by the restriction component, and in the second configuration of the restriction component, deformation of the regulation component is basically not hindered by the restriction component.

In the new battery cooling device provided by the inventor, the regulation components capable of changing the opening degrees with the temperature form automatic regulation structures so as to regulate the flow of cooling fluids at different temperatures and/or in different areas, for example, to make the overall temperature of the battery pack basically uniform. In addition, the restriction components capable of changing the configurations with the temperature form active restriction structures for opening degree regulation of the regulation components so as to actively restrict the increasing of the opening degrees of the regulation components, for example, to actively restrict heat dissipation to achieve heat preservation and even heating, which is particularly advantageous at the low temperature. The two demands are met synergistically by means of the new battery cooling device.

In addition, appropriate materials are selected for the regulation components and the restriction components, and these components are appropriately constructed, so that the new battery cooling device can be manufactured easily, and/or the existing battery cooling device can be transformed easily.

In addition, the volume of the battery pack can be set more flexibly, and the cells can be selected, matched and arranged more flexibly.

The battery cooling device and the battery pack disclosed in the embodiments of the present application can be used to, but not limited to, electrical devices such as vehicles, ships or aircrafts. A power system provided with the electrical device including the battery cooling device and the battery pack disclosed in the present application can be used.

An embodiment of the present application provides an electrical device using a battery as a power source, and the electrical device can be, but not limited to, a mobile phone, a tablet computer, a laptop, an electric toy, an electric tool, a storage battery car, an electric vehicle, a steamship and an aircraft. The electric toy may be a fixed or movable electric toy, for example, a game machine, an electric vehicle toy, an electric steamship toy and an electric airplane toy, and the aircraft may be an airplane, a rocket, a space shuttle and a spacecraft.

To facilitate illustration, a vehicle 1000 is taken as an example of the electrical device of one embodiment of the present application for illustration.

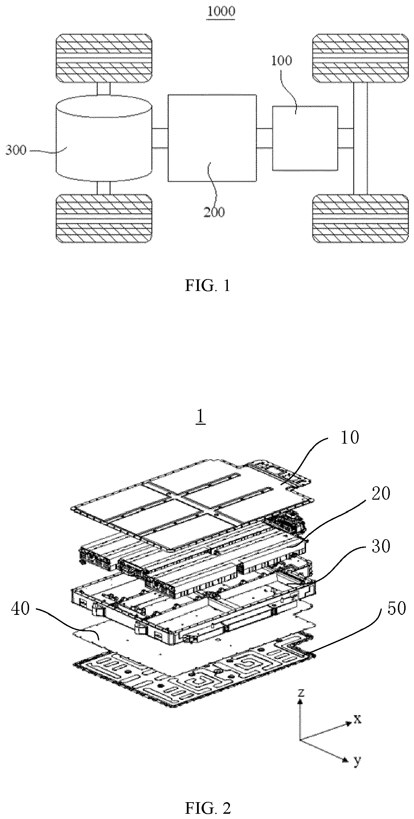

Reference is made to FIG. 1, which is a structure diagram of the vehicle 1000 according to some embodiments of the present application. The vehicle 1000 may be a fuel vehicle, a gas vehicle or a new energy vehicle, and the new energy vehicle may be a battery electric vehicle, a hybrid electric vehicle or an extended-range vehicle. The vehicle 1000 is internally provided with a battery 100, and the battery 100 may be arranged at the bottom, the head or the tail of the vehicle 1000. The battery 100 may be applied to power supply of the vehicle 1000, for example, the battery 100 may serve as an operating power source of the vehicle 1000. The vehicle 1000 may further include a controller 200 and a motor 300, and the controller 200 is configured to control the battery 100 to supply power to the motor 300, for example, to meet the working power demands during starting, navigation and traveling of the vehicle 1000.

In some embodiments of the present application, the battery 100 can serve as the operating power source of the vehicle 1000, and can also serve as a driving power source of the vehicle 1000 to replace or partially replace fuel oil or natural gas to provide driving power for the vehicle 1000.

Reference is made to FIG. 2, which is a schematic diagram of an exploded structure of a battery pack 1 according to some embodiments of the present application. The battery pack 1 includes an upper cover plate 10, battery modules 20, a lower box body 30, a battery cooling device 40, and a bottom protective plate 50.

The upper cover plate 10 covers the lower box body 30 to provide an accommodating space for the battery modules 20. In the embodiment as shown in the drawing, the upper cover plate 10 is of a plate-shaped structure, the lower box body 30 is of a hollow structure with an open side, and the upper cover plate 10 covers the open side of the lower box body 30 to jointly define the accommodating space. Alternative structures of the upper cover plate 10 and the lower box body 30 may also be included. In embodiments not shown, two portions jointly defining the accommodating space are both of hollow structures with open sides, and the open sides of the two portions cover each other in a mutually facing manner. The upper cover plate 10 and the lower box body 30 or the portions jointly defining the accommodating space may be in various shapes, for example, cylindrical, rectangular, etc.

In the battery pack 100, there may be a plurality of battery cells, the plurality of battery cells may be in series connection, in parallel connection or in parallel-series connection, and the parallel-series connection means that the plurality of battery cells are in both series connection and parallel connection. The plurality of battery cells may be directly in series connection, in parallel connection or in parallel-series connection, and then the whole formed by the plurality of battery cells is accommodated in the accommodating space. The plurality of battery cells may also be in series connection, in parallel connection or in parallel-series connection to form the battery modules 20, and then the plurality of battery modules 20 are in series connection, in parallel connection or in parallel-series connection to form a whole, and the battery pack 1 is accommodated in the accommodating space. The battery pack 1 may also include other structures, for example, the battery 100 may also include converging components configured to achieve electrical connection of the plurality of battery cells.

Each of the battery cells may be a secondary battery or a primary battery, and may also be a lithium-sulfur battery, a sodium-ion battery or a magnesium-ion battery but is not limited to this. The battery cells may be cylindrical, flat, rectangular or in other shapes.

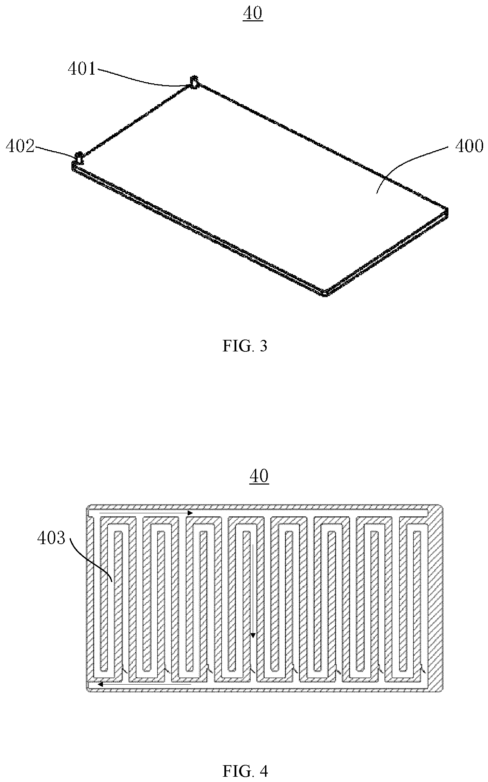

Reference is made to FIG. 3 and FIG. 4, FIG. 3 is a schematic diagram of an external structure of a battery cooling device 40 according to some embodiments of the present application, and FIG. 4 is a schematic diagram of a sectional structure of the battery cooling device 40 according to some embodiments of the present application. The battery cooling device 40 includes a shell 400, a cooling fluid inlet 401 and a cooling fluid outlet 402. The cooling fluid inlet 401 and the cooling fluid outlet 402 may include corresponding end ports protruding out of a surface of the shell 400. The cooling fluid inlet 401 and the cooling fluid outlet 402 are in communication with cooling channels 403 arranged inside the shell 400 of the battery cooling device 40. Cooling fluids may flow inside the cooling channels 403 and are configured to cool the battery pack 1. The cooling fluids may include water, alcohols and silicone oil. For clarity and simplicity, only one cooling channel 403 is marked in FIG. 4. In the embodiment as shown in the drawings, the battery cooling device 40 includes eight cooling channels. In the embodiment not shown, the battery cooling device may include more or less cooling channels. In the embodiment as shown in the drawings, the battery cooling device 40 is of a roughly rectangular plate-shaped structure. In the embodiment not shown, the battery cooling device may be in other shapes, for example, circular and polygonal.

Reference is made to FIG. 2 again. The battery cooling device 40 is arranged below the lower box body 30, the bottom protective plate 50 is arranged below the battery cooling device 40 and is configured to protect the battery cooling device 40 and the lower box body 20 to prevent, for example, collisions below from damaging the battery pack 1. The upper cover plate 10, the lower box body 30, the battery cooling device 40 and the bottom protective plate 50 may be made of copper, iron, aluminum, stainless steel, aluminum alloys, etc., which are not specially restricted in the present application.

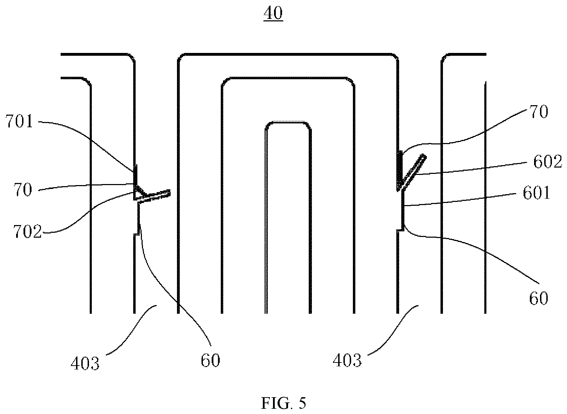

According to some embodiments of the present application, reference is made to FIGS. 5-6 and FIGS. 8-11, which are schematic diagrams of local structures of the battery cooling device 40 according to some embodiments of the present application, and the top portion of the battery cooling device 40 is removed to show the interior of the battery cooling device 40 more clearly. The battery cooling device 40 includes a shell 400, cooling channels 403, cooling fluid flow regulation components 60 (hereinafter referred to as regulation components 60), and regulation component deformation restriction components 70 (hereinafter referred to as restriction components 70). The cooling channels 403, the regulation components 60 and the restriction components 70 are all arranged inside the shell 40. The cooling channels 403 are configured to allow flowing of cooling fluids and restrict flowing directions of the cooling fluids along the cooling channels 403. Each of the regulation components 60 is deformed from a first opening degree with the small fluid flow to a second opening degree with the large fluid flow when the temperature rises, or vice versa. Each of the restriction components 70 is deformed from a first configuration to a second configuration when the temperature rises, or vice versa. Each of the restriction components 70 is positioned next to the regulation component 60, so that in the first configuration of the restriction component 70, deformation of the regulation component 60 for increasing the opening degree is at least partially hindered by the restriction component 70, and in the second configuration of the restriction component 70, deformation of the regulation component 60 is basically not hindered by the restriction component 70. When each of the regulation components 60 is deformed from the first opening degree to the second opening degree, the corresponding restriction component 70 is changed from the first configuration to the second configuration, and when the regulation component 60 is deformed from the second opening degree to the first opening degree, the restriction component 70 is changed from the second configuration to the first configuration.

The expression of "flowing directions of the cooling fluids" is used herein. It should be noted that although the cooling fluids may be turbulent in the cooling channels 403 to have changing component motions, such expression aims to indicate the main flowing directions of the cooling fluids from upstream to downstream in extension directions of the cooling channels 403. Therefore, the "flowing directions of the cooling fluids" may roughly match with or be roughly parallel with the extension directions of the cooling channels 403.

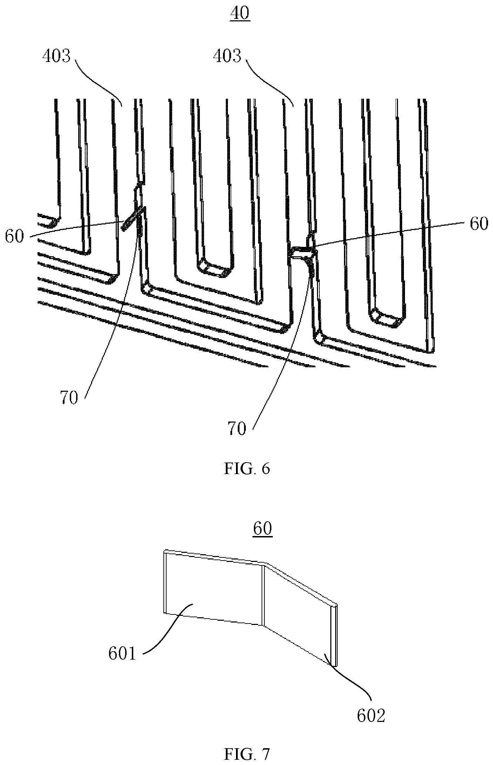

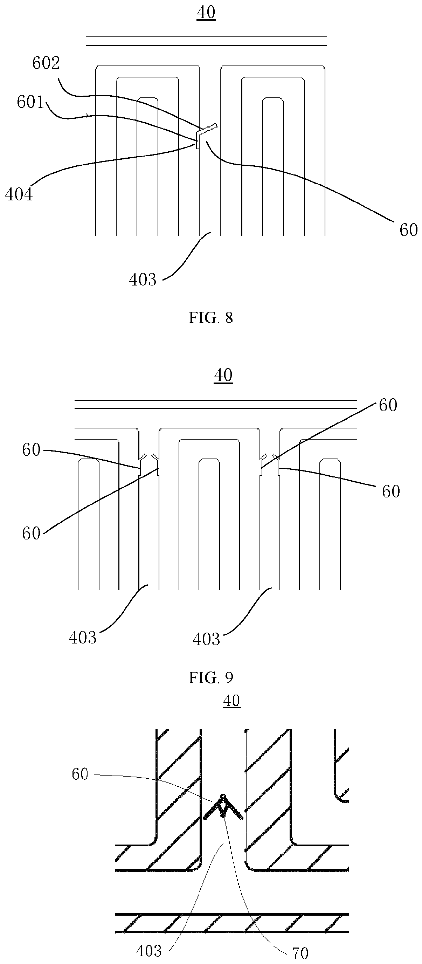

For clarity and simplicity, the restriction components 70 are not drawn in FIGS. 8-9, and FIG. 10 and FIG. 11 only show in an exemplary manner that the regulation component 60 is in the first opening degree and the restriction component 70 is in the first configuration. FIG. 5 and FIG. 6 show in an exemplary manner that the first opening degree and the second opening degree of the regulation component 60 and the first configuration and the second configuration of the restriction component 70. It should be noted that although the first configuration and the second configuration and the first opening degree and the second opening degree are drawn in an exemplary manner in the different cooling channels 403 of the same battery cooling device 40, it does not mean that the battery cooling device 40 must be in the given states as shown in FIG. 5 and FIG. 6 at a certain time during working. On the contrary, such drawing manner is intended to help clarifying the interaction of the regulation components 60 and the restriction components 70 which are positioned next to each other. Specifically, in the cooling channels 403 as shown on the left side of FIG. 5 and the right side of FIG. 6, the regulation components 60 are in the first opening degree, and the restriction components 70 are in the first configuration, which, for example, correspond to the first temperature. Therefore, the regulation components 60 will be hindered by the restriction components 70 and cannot further increase the opening degrees basically. In the cooling channels 403 as shown on the right side of FIG. 5 and the left side of FIG. 6, the regulation components 60 are in the second opening degree, and the restriction components 70 are in the second configuration, which, for example, correspond to the second temperature higher than the first temperature. Therefore, the regulation components 60 are no longer hindered by the restriction components 70 and can further increase the opening degrees.

The regulation components 60 capable of regulating the opening degree with temperature according to the present application, and the matched restriction components 70 for selectively restricting the deformation of the regulation components 60 for increasing the opening degrees are arranged inside the battery cooling device 40, particularly inside the cooling channels 403, so that the requirements of promoting heat dissipation when the temperature rises and restricting heat dissipation at the low temperature are met synergistically.

According to some embodiments of the present application, each of the regulation components 60 is deformed from the second opening degree with the large fluid flow to the third opening degree with the larger fluid flow when the temperature rises, or vice versa. When each of the regulation components 60 is deformed from the second opening degree to the third opening degree and when the regulation component is deformed from the third opening degree to the second opening degree, the corresponding restriction component 70 basically keeps the second configuration.

As stated above, in the cooling channels 403 as shown on the right side of FIG. 5 and the left side of FIG. 6, the regulation components 60 are in the second opening degree, and the restriction components 70 are in the second configuration. When the temperature further rises to be higher than the second temperature, each of the regulation components 60 will be deformed to the third opening degree, and the corresponding restriction component 70 basically keeps the second configuration, so the increase of the opening degree is not hindered.

By allowing the regulation components 60 to further increase the opening degree when the temperature further rises under the condition that the regulation components are basically not hindered by the restriction components 70, the high heat dissipation requirement at the high temperature can be handled more effectively. Correspondingly, the restriction of the restriction components 70 on heat dissipation is reasonably restricted within the low-temperature range, and when the battery pack is not required to be remarkably cooled, the regulation components are restricted from further increasing the opening degree, thereby reducing unnecessary heat dissipation.

The expressions of "opening degree" and "flow" are used herein. It should be noted that, consistent with the usual description of valves, the larger the opening degree is, the smaller the blockage to the fluids is, and the greater the flow is. That is, the relationship between the opening degree of the regulation components and the flow is that the larger the opening degree is, the greater the flow is.

According to some embodiments of the present application, reference is made to FIGS. 5-6 and FIGS. 8-11, each of the restriction components 70 includes a fixed portion 701 and at least one movable portion 702. The movable portion 702 can move relative to the fixed portion 701 according to the temperature of the restriction component 70. The fixed portion 701 is configured to fixedly attach the restriction component 70 to the inner wall of the cooling channel 403. The movable portion 702 extends in the cooling channel 403 from the fixed portion 701 to the regulation component 60.

For clarity and simplicity, the fixed portion 701 and the movable portion 702 are only marked on the restriction component 70 in the cooling channel 403 on the left side in FIG. 5. The restriction component 70 on the right side also includes the fixed portion 701 and the movable portion 702. However, the different configurations are defined as stated above.

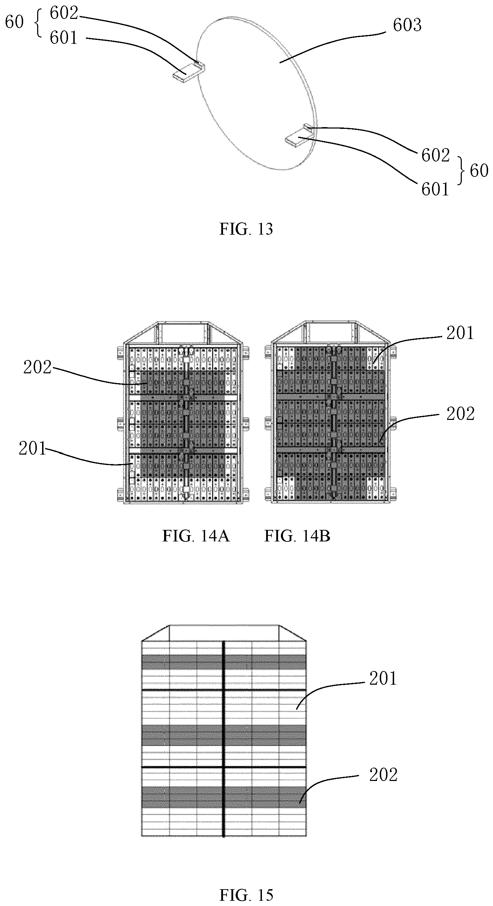

The fixed portion 701 and the movable portion 702 may be an integral portion of the restriction component 70. Taking the fixed portion 701 as a reference, the movable portion 702 may change the position, orientation and/or angle relative to the fixed portion 701. The restriction component 70 can be fixed to the inner wall of the cooling channel 403 in various appropriate manners, including but not limited to laser welding, ultrasonic welding, bolt fixing and bonding. The inner wall of each of the cooling channel 403 defines the shape of the section of the cooling channel 403. For example, in FIGS. 5-6 and FIGS. 8-11, the sections of the cooling channels 403 are in a roughly rectangular shape, and the restriction components 70 can be fixedly attached, by means of the fixed portions 701, to lateral inner walls, bottom inner walls and/or top inner walls (which are not shown due to the fact that the top of shell 400 is removed) of the cooling channels 403 having the roughly rectangular sections. Under the condition that the sections of the cooling channels 403 are in a roughly circular shape (for example, reference is made to the embodiment as described in view of FIG. 13), the restriction components 70 can be fixedly attached, by means of the fixed portions 701, to the annular inner walls of the cooling channels 403 having the roughly circular sections. The sections of the cooling channels 403 may be in other different shapes, and the restriction components 70 are correspondingly and fixedly attached, by means of the fixed portions 701, to appropriate positions of the inner walls of the cooling channels 403. The movable portions 702 may be closer to the regulation components 60 than the fixed portions 701.

Each of the restriction components 70 is constructed into the fixed portion 701 and the movable portion 702, so that the restriction component is simple in structure and easy to mount, and change of the configuration to achieve the restriction effect is also conveniently achieved through movement of the movable portion 702.

According to some embodiments of the present application, reference is made to FIGS. 5-6 and FIGS. 8-11, each of the restriction components 70 is positioned in such a manner that the movable portion 702 thereof extends on the upstream side of the fixed portion 701 thereof in the flowing direction of the corresponding cooling fluid.

The movable portion 702 is located on the upstream side of the fixed portion 701, and the regulation component 60 is located on the upstream side of the movable portion 702.

By means of such arrangement relative to the incoming flow, the structural design of the restriction components 70 may be flexible due to the fact that the incoming flow is basically not disturbed.

According to some embodiments of the present application, the fixed portion 701 of each of the restriction components 70 is at least partially positioned in a concave portion formed in the inner wall.

Each of the concave portions may correspond to at least one section of the fixed portion 701 of the corresponding restriction component 70 in shape, for example, the concave portion is in a groove shape or a hole shape. Said section of the fixed portion 701 of each of the restriction components 70 is placed in the corresponding concave portion, and then is fixed to the corresponding inner wall in the above-mentioned or other fixing means.

By at least partially positioning each of the fixed portions in the corresponding concave portion, the fixed portion 701 is not prone to accidental separation.

According to some embodiments of the present application, reference is made to FIGS. 5-6, an angle between the fixed portion 701 and the movable portion 702 of each of the restriction components 70 changes according to the temperature of the restriction component 70 so as to restrict the first configuration and the second configuration.

To describe said angle, a connection portion/junction portion between the fixed portion 701 and the movable portion 702 can be approximatively considered as a pivot portion of the movable portion 702 relative to the fixed portion 701 (although the movement of the movable portion 702 may be at least caused by the bending deformation at said portion), and thus the angle can be described as the included angle between the directions from the connection portion/junction portion to the fixed portion 701 and the movable portion 702 respectively. Under the condition that the fixed portion 701 and the movable portion 702 are plates, the angle can be directly defined by the included angle between the surfaces of the two plates. As stated above, in the cooling channels 403 on the left side of FIG. 5 and the right side of FIG. 6, the restriction components 70 are in the first configuration. It can be seen that each of the fixed portions 701 and the corresponding movable portion 702 form an obtuse angle, that is, the angle greater than 90 degrees but less than 180 degrees, and the movable portion 702 correspondingly extends into the cooling channel 403. As stated above, in the cooling channels 403 on the right side of FIG. 5 and the left side of FIG. 6, the restriction components 70 are in the second configuration. It can be seen that each of the fixed portions 701 and the corresponding movable portion 702 are in an almost straight state, that is, the angle close to or equal to 180 degrees, and the movable portion 702 is correspondingly next to the inner wall of the cooling channel 403 fixedly provided with the fixed portion 701.

The configurations of the restriction components 70 are configured on the basis of the angles between the fixed portions 701 and the movable portions 702 of the restriction components 70, thereby conveniently achieving the required changes of the configurations of the restriction components 70.

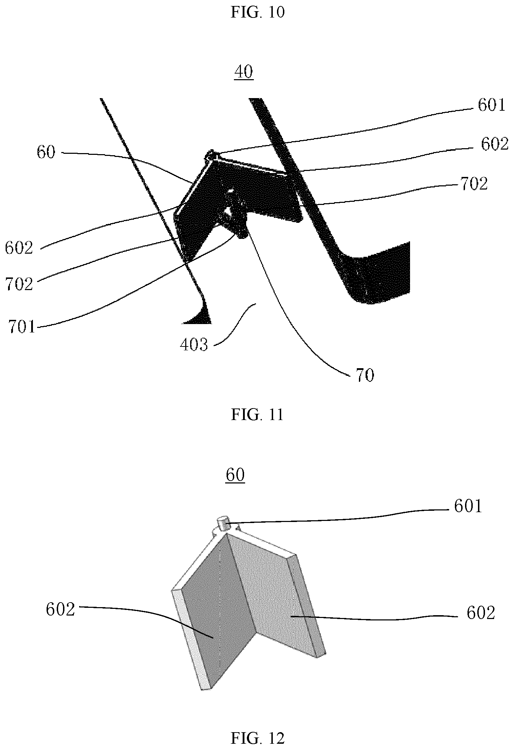

According to some embodiments of the present application, reference is made to FIGS. 10-11, each of the restriction components 70 includes two movable portions 702. An angle between the two movable portions 702 changes according to the temperature of the restriction component 70 so as to restrict the first configuration and the second configuration.

To describe said angle, a connection portion/junction portion between the fixed portion 701 and each of the movable portions 702 can be approximatively considered as a pivot portion of the movable portion 702 relative to the fixed portion 701 (although the movement of the movable portion 702 may be at least caused by the bending deformation at said portion and the pivot portion may at least partially coincide), and thus the angle can be described as the included angle between the directions from the corresponding connection portion/junction portion to the movable portions 702 respectively. Under the condition that the two movable portions 702 are plates, the angle can be directly defined by the included angle between the surfaces of the two plates. As stated above, in FIG. 10 and FIG. 11, for example, the restriction components 70 are in the first configuration. It can be seen that the two movable portions 702 form an included angle, that is, the angle greater than 0 degree but less than 180 degrees, and the two movable portions 702 correspondingly extend to two sides. It can be understood that when each of the restriction components 70 is in the second configuration, the two movable portions 702 may be close to each other, that is, at the angle close to or equal to 0 degree.

The configuration of each of the restriction components 70 is configured on the basis of the angle between the two movable portions 702 of the restriction component 70, thereby providing flexible options for forming selection of the restriction component 70.

According to some embodiments of the present application, reference is made to FIGS. 10-11, the fixed portion 701 of each of the restriction components 70 is positioned at the roughly central position of the width of the inner wall of the corresponding cooling channel 403 that is perpendicular to the flowing direction of the corresponding cooling fluid. Therefore, the two movable portions 702 of the restriction component 70 are roughly symmetrically arranged on two sides of the fixed portion 701 along the width.

The two movable portions 702 may be basically symmetric relative to each other along the central line of the width in both the first configuration and the second configuration. The fixed portion 701 may be a pin, which may extend by a certain distance in the first direction roughly perpendicular to the inner wall to which the fixed portion is fixed, then the two movable portions 702 may have a certain size in the first direction, and the size may be less than the above-mentioned distance. In addition, the two movable portions 702 extend away from the fixed portion 701 by a certain size in the second direction roughly perpendicular to the first direction.

By means of such symmetric arrangement, each of the restriction components 70 may cooperate with the corresponding regulation component 60 or the corresponding portion thereof in a symmetric manner, so as to improve the stability of the restriction movement.

According to some embodiments of the present application, reference is made to FIGS. 5-6 and FIGS. 8-11 and is further made to FIG. 7, FIG. 12 and FIG. 13, which are schematic diagrams of local structures of the battery cooling device 40 according to some embodiments of the present application, including exemplary structures of the regulation components 60. Each of the regulation components 60 includes a fixed portion 601 and at least one movable portion 602. The movable portion 602 can move relative to the fixed portion 601 according to the temperature of the regulation component 60. The fixed portion 601 is configured to fixedly attach the regulation component 60 to the inner wall of the corresponding cooling channel 403. The movable portion 602 extends in the cooling channel 403 from the fixed portion 601.

For clarity and simplicity, the fixed portion 601 and the movable portion 602 are only marked on the regulation component 60 in the cooling channel 403 on the right side in FIG. 5. The regulation component 60 on the left side also includes the fixed portion 601 and the movable portion 602. However, the different opening degrees are defined as stated above.

The fixed portion 601 and the movable portion 602 may be an integral portion of the regulation component 60. Taking the fixed portion 601 as a reference, the movable portion 602 may change the position, orientation and/or angle relative to the fixed portion 601. The regulation component 60 can be fixed to the inner wall of the corresponding cooling channel 403 in various appropriate manners, including but not limited to laser welding, ultrasonic welding, bolt fixing and bonding. For example, under the condition that the sections of the cooling channels 403 are in a roughly rectangular shape (for example, reference is made to embodiments described in view of FIGS. 5-12), the regulation components 60 can be fixedly attached, by means of the fixed portions 601, to lateral inner walls, bottom inner walls and/or top inner walls (which are not shown due to the fact that the top of shell 400 is removed) of the cooling channels 403 having the roughly rectangular sections. Under the condition that the sections of the cooling channels 403 are in a roughly circular shape (for example, reference is made to the embodiment as described in view of FIG. 13), the regulation components 60 can be fixedly attached, by means of the fixed portions 601, to the annular inner walls of the cooling channels 403 having the roughly circular sections. Under the condition that the sections of the cooling channels 403 are in other different shapes, the regulation components 60 are correspondingly and fixedly attached, by means of the fixed portions 601, to appropriate positions of the inner walls of the cooling channels 403. The movable portions 602 may be closer to the restriction components 70 than the fixed portions 601.

Each of the regulation components 60 is constructed into the fixed portion 601 and the movable portion 602, so that the regulation component is simple in structure and easy to mount, and change of the opening degree to regulate the flow is also conveniently achieved through movement of the movable portion 602.

According to some embodiments of the present application, reference is made to FIGS. 5-6 and FIGS. 8-11, each of the regulation components 60 is positioned in such a manner that the movable portion 602 thereof extends on the downstream side of the fixed portion 601 thereof in the flowing direction of the corresponding cooling fluid.

The movable portion 602 is located on the upstream side of the fixed portion 601, and the corresponding restriction component 70 is located on the downstream side of the movable portion 602.

By means of such arrangement relative to the incoming flow, the regulation components 60 and the restriction components 70 are positioned next to each other, and the fixed portions 601, 701 are respectively positioned at the most upstream and downstream positions and cannot disturb the cooperation areas between the regulation components 60 and the restriction components 70.

According to some embodiments of the present application, reference is made to FIG. 8, the fixed portion 601 of each of the regulation components 60 is at least partially positioned in the concave portion 404 formed in the corresponding inner wall.

Each of the concave portions 404 may correspond to at least one section of the fixed portion 601 of the corresponding regulation component 60 in shape, for example, the concave portion is in a groove shape or a hole shape. Said section of the fixed portion 601 of each of the regulation components 60 is placed in the corresponding concave portion 404, and then is fixed to the corresponding inner wall in the above-mentioned or other fixing means.

By at least partially positioning each of the fixed portions in the corresponding concave portion, the fixed portion 601 is not prone to accidental separation, and it is possible to reduce the occupied area of the fixed portion 601 in the corresponding cooling channel 403 so as to reduce the blockage and/or disturbance on the corresponding cooling fluid.

According to some embodiments of the present application, reference is made to FIG. 8, the fixed portion 601 of each of the regulation components 60 is positioned in such a manner that the surface thereof exposed to the cooling channel 403 is roughly flush with the inner wall around the surface.

Each of the fixed portions 601 is embedded in the inner wall, and specifically, in the concave portion 404 of the inner wall. The exposed surface of each of the fixed portions 601 may be roughly consistent with the surface of the inner wall around the exposed surface in shape. Each of the concave portions 404 may be roughly consistent with the portion of the fixed portion 601 positioned therein in shape. Under the condition that the fixed portions 601 are plates, the concave portions 404 may be grooves with lengths and widths basically equal to those of the plates and depths basically equal to thicknesses of the plates.

By means of the flush arrangement, the blockage and/or disturbance caused by the volume of the fixed portions 601 on the cooling channels 403 is advantageously reduced.

According to some embodiments of the present application, reference is made to FIGS. 5-9, an angle between the fixed portion 601 and the movable portion 602 of each of the regulation components 60 changes according to the temperature of the regulation component 60 so as to restrict the first opening degree and the second opening degree (and the third opening degree).

To describe said angle, a connection portion/junction portion between the fixed portion 601 and the movable portion 602 can be approximatively considered as a pivot portion of the movable portion 602 relative to the fixed portion 601 (although the movement of the movable portion 602 may be at least caused by the bending deformation at said portion), and thus the angle can be described as the included angle between the directions from the connection portion/junction portion to the fixed portion 601 and the movable portion 602 respectively. Under the condition that the fixed portion 601 and the movable portion 602 are plates, the angle can be directly defined by the included angle between the surfaces of the two plates, for example, reference is made to FIG. 7. As stated above, in the cooling channels 403 on the left side of FIG. 5 and the right side of FIG. 6, the regulation components 60 are in the first opening degree. It can be seen that each of the fixed portions 601 and the corresponding movable portion 602 form a small obtuse angle or even a right angle, and the movable portion 602 correspondingly extends into the cooling channel 403 in a steep orientation. As stated above, in the cooling channels 403 on the right side of FIG. 5 and the left side of FIG. 6, the regulation components 60 are in the second opening degree. It can be seen that each of the fixed portions 601 and the corresponding movable portion 602 form a large obtuse angle, and the movable portion 602 correspondingly extends into the cooling channel 403 in a gentle orientation. As stated above, the regulation components 60 may also be in the third opening degree. Each of the fixed portions 601 and the corresponding movable portion 602 form a larger obtuse angle, and the movable portion 602 correspondingly extends into the cooling channel 403 in a gentler orientation, and may even correspondingly get close to the movable portion 702 of the corresponding restriction component 70.

The opening degrees of the regulation components 60 are configured on the basis of the angles between the fixed portions 601 and the movable portions 602 of the regulation components 60, thereby conveniently achieving the required changes of the opening degrees of the regulation components 60.

According to some embodiments of the present application, reference is made to FIG. 9, the regulation components 60 include paired discrete regulation components 60. The two discrete regulation components 60 in each pair are basically fixedly attached to the inner walls of the corresponding cooling channel 403 in a mirror image manner by means of the respective fixed portions 601.

The two discrete regulation components 60 in each pair are positioned on two opposite sides of the corresponding cooling channel 403 in the direction perpendicular to the flowing direction of the corresponding fluid, or are positioned on the opposite inner walls or inner wall portions, and are basically positioned in a mirror image manner at the first opening degree and the second opening degree (and the third opening degree).

It should be noted that FIG. 13 detailed below also shows the paired discrete regulation components 60 having the corresponding characteristics.

By means of such mirror image arrangement, the regulation components 60 on two sides are operated at the same time and are more sensitive to the temperature changes of the cooling fluids, and the flow of the cooling fluids is controlled more quickly.

According to some embodiments of the present application, reference is made to FIGS. 10-12, each of the regulation components 60 includes two movable portions 602. An angle between the two movable portions 602 changes according to the temperature of the regulation component 60 so as to restrict the first opening degree and the second opening degree (and the third opening degree).

To describe said angle, a connection portion/junction portion between the fixed portion 601 and each of the movable portions 602 can be approximatively considered as a pivot portion of the movable portion 602 relative to the fixed portion 601 (although the movement of the movable portion 602 may be at least caused by the bending deformation at said portion and the pivot portion may at least partially coincide), and thus the angle can be described as the included angle between the directions from the corresponding connection portion/junction portion to the movable portions 602 respectively. Under the condition that the two movable portions 602 are plates, the angle can be directly defined by the included angle between the surfaces of the two plates, for example, reference is made to FIG. 12. As stated above, in FIG. 10 and FIG. 11, for example, the regulation components 60 are in the first opening degree. It can be seen that the two movable portions 602 form an included angle, and the two movable portions 702 correspondingly extend to two sides in a steep orientation. It can be understood that when each of the regulation components 60 is in the second opening degree (and the third opening degree), the two movable portions 602 may gradually get close to each other, that is, the included angle is gradually reduced.

The opening degree of each of the regulation components 60 is configured on the basis of the angle between the two movable portions 602 of the regulation component 60, thereby providing flexible options for forming selection of the regulation component 60.

According to some embodiments of the present application, reference is made to FIGS. 10-11, the fixed portion 601 of each of the regulation components 60 is positioned at the roughly central position of the width of the inner wall of the corresponding cooling channel 403 that is perpendicular to the flowing direction of the corresponding cooling fluid. Therefore, the two movable portions 602 of the regulation component 60 are roughly symmetrically arranged on two sides of the fixed portion 601 along the width.

The two movable portions 602 may be basically symmetric relative to each other along the central line of the width in both the first opening degree and the second opening degree (and the third opening degree). The fixed portion 601 may be a pin, which may extend in the first direction roughly perpendicular to the inner wall to which the fixed portion is fixed, and then the two movable portions 602 may have a certain size in the first direction. In addition, the two movable portions 602 extend away from the fixed portion 601 by a certain size in the second direction roughly perpendicular to the first direction.

By means of such symmetric arrangement, each of the regulation components 60 may cooperate with the corresponding restriction component 70 or the corresponding portion thereof in a symmetric manner, and also obtain the fast responsiveness similar to the above.

According to some embodiments of the present application, reference is made to FIGS. 5-6 and FIGS. 8-11, increasing the opening degree includes: reducing the proportion of the projected area, relative to the overall area of the section of the corresponding cooling channel 403 that is perpendicular to the flowing direction of the corresponding cooling fluid, of each of the movable portions 602 of the regulation components 60 in the section at the position of the regulation component 60.

The movable portions 602 form blocking structures of the cooling channel 403. The opening degrees of the regulation components may correspond to the blocking degrees of the cooling channel 403 due to the movable portions 602.

The movable portions 602 play a role in blockage, and thus the design of the regulation components 60 may be simplified.

According to some embodiments of the present application, reference is made to FIGS. 5-6 and FIGS. 8-11, the section of each of the cooling channels 403 that is perpendicular to the flowing direction of the corresponding cooling fluid is constructed into a rough rectangle. Each of the movable portions 602 of the regulation components 60 restricts a length extending from the corresponding fixed portion 601 and a width roughly perpendicular to the length. Each of the regulation components 60 can be constructed as follows:

reference is made to FIGS. 5-6 and FIGS. 8-9, the width of each movable portion 602 of the regulation component 60 for the given cooling channel 403 is constructed to be basically equal to the width of the inner wall, to which the regulation component 60 is attached, that is perpendicular to the flowing direction of the corresponding cooling fluid; and the sum of the lengths of all the movable portions 602 of the regulation component 60 for the given cooling channel 403 is constructed to be no less than the width of the inner wall, roughly orthogonal to the inner wall to which the regulation component 60 is attached, that is perpendicular to the flowing direction of the corresponding cooling fluid.

Reference is made to FIG. 7, the exemplary regulation component 60 applicable to the above-mentioned structure includes a plate-shaped fixed portion 601 and a plate-shaped movable portion 602, an angle between the fixed portion 601 and the movable portion 602 can change with temperature, and the angle can change, for example, between 90 degrees to 180 degrees (not necessarily reaching the lower limit end value, for example, due to the possibility of the larger sum of the above-mentioned lengths; and not necessarily reaching the upper limit end value, for example, due to the possibility of the movable portion 602 overlapping with the restriction component 70). With the increase of the angle, the degree of the movable portion 602 crossing the corresponding cooling channel 403 is reduced, thus the blockage of the cooling channel 403 due to the movable portion 602 is reduced, and the opening degree is increased.

As an alternative, reference is made to FIGS. 10-11, the width of each movable portion 602 of the regulation component 60 for the given cooling channel 403 is constructed to be basically equal to the width of the inner wall, roughly orthogonal to the inner wall to which the regulation component 60 is attached, that is perpendicular to the flowing direction of the corresponding cooling fluid; and the sum of the lengths of all the movable portions 602 of the regulation component 60 for the given cooling channel 403 is constructed to be no less than the width of the inner wall, to which the regulation component 60 is attached, that is perpendicular to the flowing direction of the corresponding cooling fluid.

Reference is made to FIG. 12, the exemplary regulation component 60 applicable to the above-mentioned structure includes a pin-shaped fixed portion 601 and two plate-shaped movable portions 602, an angle between the two movable portions 602 can change with temperature, and the angle can change, for example, between 0 degree to 180 degrees (not necessarily reaching the upper limit end value, for example, due to the possibility of the larger sum of the above-mentioned lengths; and not necessarily reaching the lower limit end value, for example, due to the possibility of the movable portions 602 overlapping with the restriction component 70). With the increase of the angle, the degree of the movable portions 602 crossing the corresponding cooling channel 403 is increased, thus the blockage of the cooling channel 403 due to the movable portions 602 is increased, and the opening degree is reduced.

By means of the above-mentioned design, the regulation range of the opening degrees of the cooling channels 403 is from almost not allowing the cooling fluids to pass through to basically not hindering the cooling fluids.

According to some embodiments of the present application, reference is made to FIGS. 5-12, each of the movable portions 602 of the regulation components 60 is constructed in a restricted manner to have a front surface configured to face the corresponding incoming cooling fluid and a rear surface opposite the front surface, and the rear surface is constructed to abut against the tail end of the corresponding movable portion 702 of the corresponding restriction component 70 so as to basically hinder the deformation of the regulation component 60 for increasing the opening degree in the case of abutting.

The contact between the movable portions 602 of the regulation components 60 and the movable portions 702 of the restriction components 70 is shown in an exemplary manner in the cooling channel 403 on the left side of FIG. 5, the cooling channel 403 on the right side of FIG. 6 and the cooling channels 403 in FIG. 10 and FIG. 11. In some cases, such contact is like the movable portions 702 of the restriction components 70 abutting against the movable portions 602 of the regulation components 60 from the downstream side.

By means of such abutting contact, compared with the large flow, the high impact effect (which may disadvantageously and slightly break through the regulation components 60) of the cooling fluids in the small flow may also be at least partially relieved, thereby further enhancing the required restriction purpose.

According to some embodiments of the present application, reference is made to FIG. 13, which is a schematic diagram of a component structure of the battery cooling device 40 according to some embodiments of the present application. Under the condition that the sections of the cooling channels 403 perpendicular to the flowing directions of the cooling fluids are constructed into rough circles, the paired discrete regulation components 60 are fixedly connected to blocking components 603 by means of the respective movable portions 602. The blocking components 603 have roughly circular sections corresponding to the sections of the cooling channels 403. The two discrete regulation components 602 in each pair are positioned in the radially opposite areas on the same side of the blocking component 603 along the flowing direction of the cooling fluid. Therefore, the blocking component 603 can pivot to change the opening degree, particularly to change the proportion of the projected area, relative to the overall area of the section of the cooling channel 403 that is perpendicular to the flowing direction of the cooling fluid, of the blocking component 603 in the section at the position of the regulation component 60.

Fixed connection may be achieved in various appropriate fixing manners, including but not limited to laser welding, ultrasonic welding, bolt fixing and bonding. The blocking component 603 may be made of a metal material, and may also be made of a polymer plastic material, etc. The blocking component 603 may be in a plate shape. The two discrete regulation components 602 are roughly radially oppositely positioned, thereby providing a hinge type pivot structure for the blocking component 603. The blocking component 603 may pivot from the direction roughly perpendicular to the flowing direction of the corresponding cooling fluid to the direction roughly parallel to the flowing direction of the cooling fluid. The restriction components 70 may be positioned next to the blocking component 603 at the appropriate angular positions around the periphery of the blocking component 603 in the cooling channel 403, so as to be applied to the selective restriction effect. Depending on whether the portions of the blocking component 603 at the angular positions face against or along the flowing direction of the cooling fluid during the movement for increasing the opening degree, the restriction components 70 may be correspondingly positioned on the same side or the opposite sides of the blocking component 603 relative to the paired discrete regulation components 60. For example, the restriction components 70 may be located at, at least, one of the two radially opposite angular positions of the blocking component 603 at angles of about 90 degrees relative to the connecting line of the two discrete regulation components 602.

By means of the above-mentioned design, the regulation range of the opening degrees of the cooling channels 403 is from almost not allowing the cooling fluids to pass through to basically not hindering the cooling fluids.

According to some embodiments of the present application, the restriction components 70 and/or the regulation components 60 include shape memory alloys.

The shape memory alloys have a shape memory effect as follows: said alloys are deformed from the original shapes and can eliminate the generated deformation under temperature changes to restore the original shapes before deformation. The shape memory alloys preferably include Au-Cd, Ag-Cd, Cu-Zn, Cu-Zn-Al, Cu-Zn-Sn, Cu-Zn-Si, Cu-Sn, Cu-Zn-Ga, In-Ti, Au-Cu-Zn, NiAl, Fe-Pt, Ti-Ni, Ti-Ni-Pd, Ti-Nb, U-Nb, Fe-Mn-Si, etc. In particular, the fixed portions 701 and the movable portions 702 of the restriction components 70 are made of the shape memory alloys, and/or the fixed portions 601 and the movable portions 602 of the regulation components 60 are made of the shape memory alloys.

As stated above, the configuration changes of the restriction components and the opening degree changes of the regulation components are related to the temperatures. Using the shape memory alloys is beneficial to the autonomous temperature control characteristic.

In addition, in the above-mentioned embodiments using the angles, the good regulation result can be obtained by setting the corresponding relationships between several groups of temperatures and angles.

The inventor found that there may be the following preferred corresponding relationships between the temperatures and the angles for the embodiments as shown in FIGS. 5-9 and FIG. 13:

**Table 1**

| Group No. | Regulation component | | Restriction component | |
|---|---|---|---|---|
| | Temperature/°C | Included angle between movable portion and fixed portion/° | Temperature/°C | Included angle between movable portion and fixed portion/° |
| 1 | -10 | 105 | -10 | 135 |
| 2 | 0 | 112 | 0 | 155 |
| 3 | 25 | 140 | 25 | 180 |
| 4 | 45 | 165 | 45 | 180 |
| 5 | 55 | 174 | 55 | 180 |

Similarly, there may be the following preferred corresponding relationships between the temperatures and the angles for the embodiments as shown in FIGS. 10-12:

**Table 2**

| Group No. | Regulation component | | Restriction component | |
|---|---|---|---|---|
| | Temperature/°C | Included angle between movable portions/° | Temperature/°C | Included angle between movable portions/° |
| 1 | -10 | 150 | -10 | 90 |
| 2 | 0 | 136 | 0 | 50 |
| 3 | 25 | 80 | 25 | 0 |
| 4 | 45 | 30 | 45 | 0 |
| 5 | 55 | 12 | 55 | 0 |

Therefore, each of the restriction components 70 is constructed in such a manner that the angles formed between the movable portion 702 thereof and the flowing direction of the corresponding cooling fluid from the first configuration of the restriction component 70 to the second configuration are gradually increased. Each of the regulation components 60 is constructed in such a manner that the angles formed between the movable portion 602 thereof and the flowing direction of the corresponding cooling fluid from the first opening degree of the regulation component 60 to the second opening degree (and even the third opening degree) are gradually reduced.

According to such structure, detailed design can be carried out by adjusting the material composition and processing technologies of the shape memory alloys, so as to obtain the expected temperature and angle (therefore temperature and opening degree and restriction) change trend.

According to some embodiments of the present application, reference is made back to FIG. 4, the cooling channels 403 include a plurality of cooling channels 403 each including an upstream end and a downstream end. Each of the cooling channels 403 sinuously extends between the upstream end and the downstream end thereof. The restriction components 70 and the regulation components 60 in the cooling channels 403 are positioned near the downstream ends or at the highest-temperature positions which the cooling channels 403 pass through.

For clarity and simplicity, no restriction component 70 is shown in FIG. 4. Each of the cooling channels 403 may be a branch channel connected between a main inflow channel and a main outflow channel. The flowing directions of the cooling fluids in the main inflow channel and the main outflow channel and the flowing direction of the cooling fluid in one of the cooling channels 403 are drawn in an exemplary manner by means of arrows in FIG. 4.

By means of such design of the cooling channels 403 and such positioning of the restriction components 70 and the regulation components 60, the cooling effect is better, the local temperature control is more precise, thus regional cooling of the battery pack can be performed precisely, and it is more sensitive to the positions having large temperature rise or the outlet temperature. Specifically, heat can be at least exchanged between the restriction components 70 and the regulation components 60 and the cooling fluids in contact with said components, and/or between the restriction components 70 and the regulation components 60 and the inner walls of the cooling channels 403 to which said components are fixed.

According to some embodiments of the present application, a battery pack is further provided, the battery pack includes a frame and battery modules accommodated in the frame. The battery pack further includes a battery cooling device 60 according to the present application. The battery cooling device 60 is configured to cool the battery modules.

By means of the battery cooling device 60 according to the present application, when heat dissipation needs to be promoted, the flow of the cooling fluids is increased in high-heat areas of the battery modules, thereby enhancing the heat dissipation; when heat dissipation needs to be restricted, the flow of the cooling fluids is restricted and even there is no flow of the cooling fluids in low-temperature areas of the battery modules, thereby slowing down the heat dissipation.

According to some embodiments of the present application, reference is made to FIG. 14A, FIG. 14B and FIG. 15, which are schematic diagrams of arrangement modes of battery cells in the battery pack according to some embodiments of the present application. Each of the battery modules includes first battery cells 201 having a first heating characteristic, and second battery cells 202 having a second heating characteristic different from the first heating characteristic.

In FIG. 14A, FIG. 14B and FIG. 15, the first battery cells 201 are represented in white, and the second battery cells 202 are represented in gray. The different heating characteristics may include, for example, having different heating values at the same voltage, current, power or temperature.

According to some embodiments of the present application, reference is made to FIG. 15, the first battery cells 201 and the second battery cells 202 are arranged alternately on the basis of one or more rows of the identical battery modules; or reference is made to FIG. 14A and FIG. 14B, the first battery cells 201 are at least arranged at corner regions of the battery pack, and the second battery cells 202 are at least arranged at the central region of the battery pack.

Reference is made to FIG. 15, the identical or different numbers of rows of the identical battery modules can be arranged continuously and are arranged alternately with the identical or different numbers of rows of other battery modules. Reference is made to FIG. 14A, the first battery cells 201 are also arranged at the corner regions of the battery pack, and thus the second battery cells 202 are only arranged at the central region of the battery pack. Reference is made to FIG. 14B, the second battery cells 202 are also arranged at the edge regions of the battery pack, and thus the first battery cells 201 are only arranged at the corner regions of the battery pack.

The first battery cells 201 and/or the second battery cells 202 may have different positive electrode active materials. For example, the positive electrode active materials may be well-known positive electrode active materials for batteries in the art. The positive electrode materials may be, for example, lithium cobalt oxides, lithium nickel oxides, lithium manganese oxides, lithium vanadium oxides, manganese nickel cobalt composite oxides, nickel cobalt aluminum composite oxides, transition metal oxides, polyanionic compounds, Prussian blue compounds, etc. As an example, the positive electrode active materials may include at least one of the following materials: Li-contained phosphates of olivine structures, lithium transition metal oxides and their respective modified compounds. However, the present application is not limited to these materials, and can use other traditional materials that can serve as the positive electrode active materials of the batteries. These positive electrode active materials can be used alone, and two or more of said materials can be combined for use. The examples of the lithium transition metal oxides can include but not limited to at least one of the lithium cobalt oxides (such as LiCoO₂), lithium nickel oxides (such as LiNiO₂), lithium manganese oxides (such as LiMnO₂ and LiMn₂O₄), lithium nickel cobalt oxides, lithium manganese cobalt oxides, lithium nickel manganese oxides, lithium nickel cobalt manganese oxides (such as LiNi_{1/3}Co_{1/3}Mn_{1/3}O₂ (also called NCM₃₃₃ for short), LiNi_{0.5}Co_{0.2}Mn_{0.3}O₂ (also called NCM₅₂₃ for short), LiNi_{0.5}Co_{0.25}Mn_{0.25}O₂ (also called NCM₂₁₁ for short), LiNi_{0.6}Co_{0.2}Mn_{0.2}O₂ (also called NCM₆₂₂ for short), and LiNi_{0.8}Co_{0.1}Mn_{0.1}O₂ (also called NCM₈₁₁ for short)), lithium nickel cobalt aluminum oxides (such as LiNi_{0.85}Co_{0.15}Al_{0.05}O₂) and their modified compounds. The examples of the Li-contained phosphates of olivine structures can include but not limited to at least one of lithium iron phosphates (such as LiFePO₄ (also called LFP for short)), lithium iron phosphate and carbon composite materials, lithium manganese phosphates (such as LiMnPO₄), lithium manganese phosphate and carbon composite materials, lithium ferromanganese phosphates and lithium ferromanganese phosphate and carbon composite materials.

In addition, the first battery cells 201 and/or the second battery cells 202 may be battery cells having different energy densities. For example, some of the battery cells are batteries having the low energy density/gram capacity, such as sodium-ion batteries, lithium iron phosphate batteries and lithium manganate batteries, and the remaining battery cells are batteries having the high energy density/gram capacity, such as ternary NCM or NCA batteries, lithium metal batteries, etc. The use of the battery cells of different chemical systems can facilitate the customized design of the energy densities of the battery modules.

The first battery cells 201 and/or the second battery cells 202 use the different positive electrode active materials, for example, one kind of the battery cells are the ternary batteries, and the other kind of the battery cells are the lithium iron phosphate batteries; the cost of the whole battery modules and therefore the cost of the whole battery pack are reduced by means of the lithium iron phosphate batteries, and the safety of the battery pack is improved due to the characteristic of not being prone to thermal runaway, for example, in case of thermal runaway of the ternary batteries, the lithium iron phosphate batteries can serve as shields to maintain the safety of the whole battery modules and the battery pack. At the same time, the use of the ternary batteries ensures the good performance of the battery modules and the battery pack. In addition, the measurement precision of the state of charge of the battery pack can also be improved by means of the different curve characteristics of the ternary batteries and the lithium iron phosphate batteries.

The battery cooling device 60 according to the present application is arranged in the battery pack, heat dissipation and heat preservation are effectively guaranteed, and thus the cell selection, matching and arrangement and the final volume and capacity of the battery pack can be more flexibly considered according to needs.

According to some embodiments of the present application, an electrical device is further provided, the electrical device including the battery pack according to the present application, wherein the battery pack is configured to provide electric energy.

According to some embodiments of the present application, a method for manufacturing a battery cooling device is further provided, the method including: providing a shell; arranging cooling channels inside the shell, wherein the cooling channels are configured to allow flowing of cooling fluids and restrict flowing directions of the cooling fluids along the cooling channels; arranging cooling fluid flow regulation components inside the shell, wherein each of the regulation components is constructed to be deformed from a first opening degree to a second opening degree when the temperature rises, or to be deformed from the second opening degree to the first opening degree when the temperature is reduced, and the fluid flow at the first opening degree is less than the fluid flow at the second opening degree; arranging regulation component deformation restriction components inside the shell, wherein each of the restriction components is constructed to be deformed from a first configuration to a second configuration when the temperature rises, or to be deformed from the second configuration to the first configuration when the temperature is reduced; and positioning each of the restriction components next to the corresponding regulation component, so that in the first configuration of the restriction component, deformation of the regulation component for increasing the opening degree is at least partially hindered by the restriction component, and in the second configuration of the restriction component, deformation of the regulation component is basically not hindered by the restriction component, wherein the restriction component is constructed as follows: when the regulation component is deformed from the first opening degree to the second opening degree, the restriction component changes from the first configuration to the second configuration, and when the regulation component is deformed from the second opening degree to the first opening degree, the restriction component changes from the second configuration to the first configuration.

Under the condition that the battery cooling device is modified, the actions of providing the shell and arranging the cooling channels inside the shell can be performed by means of providing an existing battery cooling device, and the following manufacturing actions may be applied to the existing battery cooling device so as to complete the modification.

Finally, it should be noted that the above embodiments are only for illustrating the technical solutions of the present application, and are not limitations; although the present application is illustrated in detail with reference to the above-mentioned embodiments, those of ordinary skill in the art should understand that they can still amend the technical solutions recited in the above-mentioned embodiments, or perform equivalent substitutions on part or all of the technical features thereof; and such amendments or substitutions do not make the essence of the corresponding technical solutions depart from the scope of the technical solutions of the embodiments of the present application, and should fall within the scope of the claims and specification of the present application. Particularly, as long as there is no structural conflict, the technical features mentioned in the embodiments can be combined in any manner. The present application is not restricted to particular embodiments disclosed herein, but to include all technical solutions falling in the scope of the claims.

## Claims

1. A battery cooling device, comprising:
a shell;
a cooling channel arranged inside the shell, wherein the cooling channel is configured to allow flowing of cooling fluid and restrict a flowing direction of the cooling fluid along the cooling channel;
a cooling fluid flow regulation component arranged inside the shell, wherein the regulation component is deformed from a first opening degree to a second opening degree when the temperature rises, or is deformed from the second opening degree to the first opening degree when the temperature is reduced, and the fluid flow at the first opening degree is less than the fluid flow at the second opening degree; and
a regulation component deformation restriction component arranged inside the shell, wherein the restriction component is deformed from a first configuration to a second configuration when the temperature rises, or is deformed from the second configuration to the first configuration when the temperature is reduced; the restriction component is positioned next to the regulation component, so that in the first configuration of the restriction component, deformation of the regulation component for increasing the opening degree is at least partially hindered by the restriction component, and in the second configuration of the restriction component, deformation of the regulation component is basically not hindered by the restriction component; and
with the regulation component deforming from the first opening degree to the second opening degree, the restriction component changes from the first configuration to the second configuration, and with the regulation component deforming from the second opening degree to the first opening degree, the restriction component changes from the second configuration to the first configuration.

2. The battery cooling device according to claim 1,
wherein the regulation component is deformed from the second opening degree to a third opening degree when the temperature rises, or is deformed from the third opening degree to the second opening degree when the temperature is reduced, the fluid flow at the second opening degree is less than the fluid flow at the third opening degree, and with the regulation component deforming from the second opening degree to the third opening degree and with the regulation component deforming from the third opening degree to the second opening degree, the restriction component basically keeps the second configuration.

3. The battery cooling device according to claim 1 or 2,
wherein the restriction components comprises a fixed portion and at least one movable portion capable of moving relative to the fixed portion according to the temperature of the restriction component;
the restriction component is fixedly attached to an inner wall of the cooling channel by means of the fixed portion of the restriction component; and
the movable portion of the restriction component extends in the cooling channel from the fixed portion of the restriction component to the regulation component.

4. The battery cooling device according to claim 3,
wherein the restriction component is positioned in such a manner that the movable portion thereof extends on an upstream side of the fixed portion thereof in a flowing direction of the cooling fluid.

5. The battery cooling device according to claim 3 or 4,
wherein the fixed portion of the restriction component is at least partially positioned in a concave portion formed in an inner wall.

6. The battery cooling device according to any one of claims 3-5,
wherein an angle between the fixed portion and the at least one movable portion of the restriction component changes according to the temperature of the restriction component so as to restrict the first configuration and the second configuration.

7. The battery cooling device according to any one of claims 3-5,
wherein the at least one movable portion of the restriction component comprises two movable portions, and an angle between the two movable portions changes according to the temperature of the restriction component so as to restrict the first configuration and the second configuration.

8. The battery cooling device according to claim 7,
wherein the fixed portion of the restriction component is positioned at the roughly central position of the width of an inner wall of the cooling channel that is perpendicular to a flowing direction of the cooling fluid, so that the two movable portions of the restriction component are roughly symmetrically arranged on two sides of the fixed portion thereof along the width.

9. The battery cooling device according to any one of claims 3-8,
wherein the regulation component comprises a fixed portion and at least one movable portion capable of moving relative to the fixed portion according to the temperature of the regulation component;
the regulation components is fixedly attached to an inner wall of the cooling channel by means of the fixed portion of the regulation component; and
the movable portion of the regulation component extends in the cooling channel from the fixed portion of the regulation component.

10. The battery cooling device according to claim 9,
wherein the regulation component is positioned in such a manner that the movable portion thereof extends on a downstream side of the fixed portion thereof in a flowing direction of the cooling fluid.

11. The battery cooling device according to claim 9 or 10,
wherein the fixed portion of the regulation component is at least partially positioned in a concave portion formed in the inner wall.

12. The battery cooling device according to claim 11,
wherein the fixed portion of the regulation components is positioned in such a manner that a surface thereof exposed to the cooling channel is roughly flush with an inner wall around the surface.

13. The battery cooling device according to any one of claims 9-12,
wherein an angle between the fixed portion and the at least one movable portion of the regulation component changes according to the temperature of the regulation component so as to restrict the first opening degree and the second opening degree.

14. The battery cooling device according to claim 13,
wherein the regulation component comprises paired discrete regulation components, and the paired discrete regulation components are basically fixedly attached to the inner wall of the cooling channel in a mirror image manner by means of corresponding fixed portions thereof.

15. The battery cooling device according to any one of claims 9-12,
wherein the at least one movable portion comprises two movable portions, and an angle between the two movable portions changes according to the temperature of the regulation component so as to restrict the first opening degree and the second opening degree.

16. The battery cooling device according to claim 15,
wherein the fixed portion of the regulation component is positioned at a roughly central position of a width of the inner wall of the cooling channel that is perpendicular to a flowing direction of the cooling fluid, so that the two movable portions of the regulation component are roughly symmetrically arranged on two sides of the fixed portion thereof along the width.

17. The battery cooling device according to any one of claims 9-16,
wherein increasing the opening degree comprises: reducing the proportion of the projected area, relative to the overall area of the section of the cooling channel that is perpendicular to the flowing direction of the cooling fluid, of the movable portion of the regulation component in the section at the position of the regulation component.

18. The battery cooling device according to claim 17,
wherein the section of the cooling channel that is perpendicular to the flowing direction of the cooling fluid is constructed into a rough rectangle;
the movable portion of the regulation component restricts a length extending from the fixed portion and a width roughly perpendicular to the length; and
the width of each movable portion of the regulation component for a given cooling channel is constructed to be basically the same with one of the two following sizes, the sum of the lengths of all movable portions of the regulation component for the given cooling channel is constructed to be no less than the other one of the two following sizes, and the two sizes are as follows:
(1) the width of the inner wall, to which the regulation component is attached, that is perpendicular to the flowing direction of the cooling fluid; and
(2) the width of the inner wall, roughly orthogonal to the inner wall to which the regulation component is attached, that is perpendicular to the flowing direction of the corresponding cooling fluid.

19. The battery cooling device according to any one of claims 9-18,
wherein the movable portion of the regulation component is constructed and defined to have a front surface configured to face the incoming cooling fluid and a rear surface opposite the front surface, and the rear surface is constructed to abut against a tail end of the movable portion of the restriction component so as to basically hinder the deformation of the regulation component for increasing the opening degree in the case of abutting.

20. The battery cooling device according to claim 14,
wherein a section of the cooling channel that is perpendicular to the flowing direction of the cooling fluid is constructed into a rough circle; and
corresponding movable portions of the paired discrete regulation components are fixedly connected to blocking components having the roughly circular sections corresponding to the sections in such a manner that the paired discrete regulation components are located in the radially opposite areas on the same sides of the blocking components along the flowing directions of the cooling fluids, so that the blocking components can pivot to change the proportions of the projected areas, relative to the overall areas of the sections of the cooling channel that is perpendicular to the flowing direction of the cooling fluid, in the section at the position of the regulation component.

21. The battery cooling device according to any one of claims 1-20,
wherein the restriction component and/or the regulation component comprises a shape memory alloy.

22. The battery cooling device according to any one of claims 1-21,
wherein the cooling channel comprise a plurality of cooling channels, and each of the plurality of cooling channels comprises an upstream end and a downstream end;
each of the plurality of cooling channels sinuously extends between the upstream end and the downstream end thereof; and
the restriction component and the regulation component in each of the plurality of cooling channels are positioned near the downstream ends or at the highest-temperature positions which each of the plurality of cooling channels pass through.

23. A battery pack, comprising a frame and battery modules accommodated in the frame, and
further comprising the battery cooling device according to any one of claims 1-22, wherein the battery cooling device is configured to cool the battery modules.

24. The battery pack according to claim 23,
wherein the battery module comprises a first battery cell having a first heating characteristic, and a second battery cell having a second heating characteristic different from the first heating characteristic.

25. The battery pack according to claim 24,
wherein the first battery cell and the second battery cell are arranged alternately on the basis of one or more rows of the identical battery modules; or
the first battery cell is at least arranged at a corner region of the battery pack, and the second battery cell is at least arranged at a central region of the battery pack.

26. An electrical device, comprising the battery pack according to any one of claims 23-25, wherein the battery pack is configured to provide electric energy.

27. A method for manufacturing a battery cooling device, comprising:
providing a shell;
arranging a cooling channel inside the shell, wherein the cooling channel is configured to allow flowing of cooling fluid and restrict a flowing direction of the cooling fluid along the cooling channel;
arranging a cooling fluid flow regulation component inside the shell, wherein the regulation components is constructed to be deformed from a first opening degree to a second opening degree when the temperature rises, or to be deformed from the second opening degree to the first opening degree when the temperature is reduced, and the fluid flow at the first opening degree is less than the fluid flow at the second opening degree;
arranging a regulation component deformation restriction component inside the shell, wherein the restriction component is constructed to be deformed from a first configuration to a second configuration when the temperature rises, or to be deformed from the second configuration to the first configuration when the temperature is reduced; and positioning the restriction component next to the regulation component, so that in the first configuration of the restriction component, deformation of the regulation component for increasing the opening degree is at least partially hindered by the restriction component, and in the second configuration of the restriction component, deformation of the regulation component is basically not hindered by the restriction component,
wherein the restriction component is constructed as follows: with the regulation component deforming from the first opening degree to the second opening degree, the restriction component changes from the first configuration to the second configuration, and with the regulation component deforming from the second opening degree to the first opening degree, the restriction component changes from the second configuration to the first configuration.
